# EUROPÄISCHE PATENTANMELDUNG

(11) **EP 0 816 402 A1**
(43) Veröffentlichungstag der Anmeldung: **07.01.1998**
(21) Anmeldenummer: 97109991.6
(22) Anmeldetag: 19.06.1997
(51) Int. Cl.: C08F 220/02, C08F 265/02, C08F 291/00

(54) **Dispersionen oder Lösungen von Polymeren und Polymermischungen in Wasser**

(30) Priorität: 27.06.1996 DE 19625773
(71) Anmelder: Vianova Resins GmbH, 55252 Mainz-Kastel (DE)
(72) Erfinder: Mergardt, Bernd, Dr., 21629 Neu Wulmstorf (DE)

(57) **Zusammenfassung**

Tensid-freie wäßrige Lösungen oder Dispersionen von Polymeren enthaltend mindestens ein gegebenenfalls neutralisiertes oder teilneutralisiertes Säuregruppen-haltiges Polymer A, hergestellt durch radikalische Polymerisation von Carboxylgruppen-haltigen äthylenisch ungesättigten Verbindungen und weiteren Carboxylgruppen-freien äthylenisch ungesättigten Verbindungen in Wasser ohne Zusatz niedermolekularer Tenside sowie zusätzlich mindestens ein wasserunlösliches Polymer B in Form von Latexteilchen, wobei die Polymeren B herstellbar sind durch radikalische Emulsionspolymerisation von äthylenisch ungesättigten Verbindungen in Gegenwart einer wäßrigen Lösung oder Dispersion von Polymeren A.

## Beschreibung

In Wasser gelöste oder dispergierte Polymere und Polymermischungen werden weltweit in ökologisch vorteilhaften Bindemittel-Systemen auf Wasserbasis eingesetzt. Speziell auch für Papier- und Holzbeschichtungen ist eine Kombination vieler technischer Eigenschaften wichtig, wie sie der Fachwelt allgemein bekannt sind. Die geforderten Eigenschaftsbilder werden dabei leicht durch Mischen und Additiv-Chemie erreicht, wobei die Rahmenbreite der Bindemittelanpassung im wesentlichen bestimmt wird von den Polymer-Synthesen und den jeweiligen Herstell-Verfahren.

So enthielten z.B. Emulsionspolymerisate, die Bestandteile der Polymermischungen entsprechend EP 0 348 565 oder EP 0 338 486 sind, niedermolekulare Tenside. Die Gegenwart dieser Tenside führt zu eingeengter Anwendungsbreite, vor allem bei Applikation im Mehrschichtverbund. Die in diesem Zusammenhang bekannten Probleme der Zwischenschichthaftung sind wahrscheinlich zurückzuführen auf die Anreicherung niedermolekularer Tenside in den Oberflächenschichten.

Es war deshalb Aufgabe der vorliegenden Erfindung, wäßrige (d.i. wasserlösliche oder wasserdispergierbare) Polymere und Polymermischungen zu entwickeln, speziell auch für Papier und Holzbeschichtungen, die die Nachteile des Standes der Technik nicht haben, also vor allem frei sind von niedermolekularen Tensiden.

Die Aufgabe wird erfindungsgemäß dadurch gelöst, daß ein Säuregruppen-haltiges Polymer A erzeugt wird in Wasser ohne Zusatz niedermolekularer Tenside, das mit Zusatz eines Neutralisationsmittels eine viskose Harzlösung ergibt, in der durch Zufügen von unpolaren Monomeren und Auslösen einer Polymerisationsreaktion ein Polymer B erzeugt werden kann, das in Form von Latexteilchen anfällt.

Die Erfindung betrifft daher Tensid-freie wäßrige Lösungen oder Dispersionen von Polymeren enthaltend
a) mindestens ein gegebenenfalls neutralisiertes oder teilneutralisiertes Säuregruppen-haltiges Polymer A, hergestellt durch radikalische Polymerisation von Carboxylgruppenhaltigen äthylenisch ungesättigten Verbindungen und weiteren Carboxylgruppen-freien äthylenisch ungesättigten Verbindungen in Wasser ohne Zusatz niedermolekularer Tenside, und gegebenenfalls
b) mindestens ein wasserunlösliches Polymer B in Form von Latexteilchen, herstellbar durch radikalische Emulsionspolymerisation von äthylenisch ungesättigten Verbindungen in Gegenwart einer wäßrigen Lösung oder Dispersion von Polymeren A, sowie
c) Wasser.

In Gegenwart der Polymeren B erhält man somit eine Polymermischung aus mindestens einem Polymer A und mindestens einem Polymer B, die als wäßrige Dispersion vorliegt. In Abwesenheit der Polymeren B und bei Einsatz von mindestens zwei unterschiedlichen Polymeren A erhält man eine Polymermischung, die als wäßrige Lösung oder als wäßrige Dispersion vorliegen kann, je nach den Löslichkeitseigenschaften der Polymeren A.

Ein weiterer Gegenstand der Erfindung ist ein Verfahren zur Herstellung von tensidfreien wasserlöslichen oder wasserdispergierbaren Polymeren und Polymermischungen, indem a) ein Säuregruppen-haltiges Polymer A hergestellt wird durch Polymerisation von Carboxylgruppen-haltigen äthylenisch ungesättigten Verbindungen mit weiteren äthylenisch ungesättigten Verbindungen in Wasser ohne Zusatz niedermolekularer Tenside und gegebenenfalls anschließend vollständig oder teilweise neutralisiert wird und gegebenenfalls b) ein wasserunlösliches Polymer B in Form von Latexteilchen hergestellt wird durch Emulsionspolymerisation von äthylenisch ungesättigten Verbindungen in Gegenwart einer wäßrigen Lösung oder Dispersion von gegebenenfalls neutralisierten oder teilneutralisierten Polymeren A.

Gegenstand der vorliegenden Erfindung sind auch die Säuregruppen-haltigen wasserlöslichen oder wasserdispergierbaren Polymere A, hergestellt durch Polymerisation von Carboxylgruppenhaltigen äthylenisch ungesättigten Verbindungen mit weiteren äthylenisch ungesättigten Verbindungen in Wasser ohne Zusatz niedermolekularer Tenside, deren Salze sowie deren Lösungen oder Dispersionen in Wasser, sowie die durch Emulsionspolymerisation von äthylenisch ungesättigten Monomeren in Gegenwart dieser in Wasser gelösten oder dispergierten Polymere A hergestellten in Wasser vorliegenden Polymermischungen.

Das für die erfindungsgemäßen wasserlöslichen oder wasserdispergierbaren Polymere A für Papier- und Holzbeschichtungen erwünschte Verhalten sowie weitere spezifische Eigenschaften werden bestimmt von der Molekülgröße sowie von der Molekülarchitektur, also von Art, Menge und Verteilung geladener, polarer und unpolarer Anteile.

Wesentlich für die Eigenschaften der erfindungsgemäßen Säuregruppen-haltigen wasserlöslichen oder wasserdispergierbaren Polymere A sind die Verhältnisse der Stoffmengen der Comonomereinheiten, Anteil und Typ von Seitenketten, die Säurezahlen, molaren Massen und deren Verteilungen, Glasübergangstemperaturen (T_{g}) und insbesondere auch die Reaktionsbedingungen bei der Synthese in Wasser ohne Zusatz von niedermolekularen Tensiden.

Die Säurezahlen (Verhältnis der zur Neutralisation des Polymeren erforderlichen Masse an KOH in mg zur Masse des Polymeren in g) der Polymere A liegen vorzugsweise im Bereich von 80 bis 420, insbesondere 170 bis 275, besonders bevorzugt 190 bis 260 mg/g. Der Massenanteil an in Estergruppen gebundenen Hydroxylverbindungen im Polymer A beträgt 0 bis 25, vorzugsweise 1 bis 18, insbesondere 3 bis 15 %. Vorzugsweise wird eine gewichtsmittlere molare Masse von 300 bis 100.000, insbesondere 2.000 bis 60.000, besonders bevorzugt 4.000 bis 35.000 g/mol, erhalten. Die Glasübergangstemperaturen der Polymere liegen vorzugsweise zwischen -10 und 180 °C, insbesondere 20 und 160 °C, besonders bevorzugt 80 und 140 °C.

Zur Einführung von Carbonsäuregruppen in das Polymer A sind olefinisch ungesättigte Mono- oder Polycarbonsäuren A1, bevorzugt Mono- und Dicarbonsäuren oder deren Gemische einsetzbar. Bevorzugt werden einfach olefinisch ungesättigte aliphatische Mono- und Dicarbonsäuren eingesetzt. Als ungesättigte Monocarbonsäuren A1 werden Acrylsäure, Methacrylsäure und Crotonsäure, einzeln oder im Gemisch, verwendet. Besonders bevorzugt sind Acrylsäure, Methacrylsäure und Maleinsäurehalbester. Geeignet sind ebenfalls Halbester von Malein- und Fumarsäure mit gesättigten linearen oder verzweigten aliphatischen Alkoholen, die 1 bis 10 Kohlenstoff-Atome enthalten, insbesondere Methyl-, Äthyl, Propyl- und Butylester dieser Säuren. Als ungesättigte Dicarbonsäuren seien Dicarbonsäuren, die 4 bis 6 Kohlenstoff-Atome enthalten, genannt, beispielsweise Maleinsäure, Itaconsäure, Mesaconsäure, Fumarsäure, Methylenmalonsäure, Citraconsäure, deren Salze oder gegebenenfalls Anhydride. Die Monomere dieser Gruppe können bei der Copolymerisation in Form der freien Säure oder auch in partiell oder vollständig mit Alkalimetallbasen oder Ammoniumbasen neutralisierter Form eingesetzt werden. Der Massenanteil der Carboxylgruppen-haltigen Monomere beträgt vorzugsweise 5 bis 70 %, insbesondere 15 bis 55 %, bezogen auf die Gesamtmasse der Monomere des Polymeren A.

Als Carboxylgruppen-freie Comonomere A2 für die Carbonsäuregruppen-haltigen Monomere A1 eignen sich prinzipiell alle radikalisch polymerisierbaren äthylenisch ungesättigten Verbindungen einzeln oder in Mischungen von zwei oder mehreren dieser Verbindungen. Bevorzugt werden als A2 hydrophobe Monomere, die frei von Estergruppen, Amidgruppen, Nitrilgruppen, Sulfon- und Phosphonsäuregruppen, heterocyclischen Ringen sind, beispielsweise Vinylaromaten oder offenkettige konjugierte Diene eingesetzt. Beispielsweise seien genannt Styrol, Vinyltoluol, α-Methylstyrol, Äthylstyrol, iso-Propylstyrol, tert.-Butylstyrol, 2,4-Dimethylstyrol, Diäthylstyrol, o-Methyl-p-iso-propylstyrol, Halogenstyrole wie Chlorstyrol, Fluorstyrol und Jodstyrol, 2,4-Dicyanostyrol, Hydroxystyrol, Nitrostyrol, Aminostyrol und Phenylstyrol. Bevorzugt sind insbesondere Styrol, Vinyltoluol und α-Methylstyrol. Als offenkettige Diene sind zu nennen 1,3-Butadien, 2-Methyl-1,3-butadien, 2,3-Dimethyl-1,3-butadien, Pentadien, 2-Neopentyl-1,3-butadien und substituierte 1,3-Butadiene, wie 2-Chlor-1,3-butadien, 2-Cyan-1,3-butadien, substituierte geradkettige konjugierte Pentadiene, geradkettige und verzweigte konjugierte Hexadiene sowie andere geradkettige oder verzweigte konjugierte Diene mit in der Regel 4 bis 9 Kohlenstoffatomen. Der Massenanteil dieser Comonomere beträgt vorzugsweise 30 bis 95 %, insbesondere 45 bis 85 %, bezogen auf die Gesamtmasse der Monomere des Polymeren A.

Zur Erzielung spezieller Eigenschalten können zusätzlich auch weitere Monomere A3, beispielsweise Ester von Acryl-, Methacryl- und Crotonsäure mit gesättigten Alkoholen, die 1 bis 80, bevorzugt 1 bis 12 Kohlenstoffatome im Alkoholrest enthalten, einzeln oder im Gemisch, verwendet werden. Beispielsweise seien genannt Methylmethacrylat, Äthylacrylat, Butylacrylat, 2-Äthylhexylacrylat. Generell sind auch andere Veresterungsprodukte der Säuregruppen-haltigen Monomeren mit Monohydroxyverbindungen zusätzlich einsetzbar. Unter Monohydroxyverbindungen werden erfindungsgemäß Monoalkohole und monoverätherte Polyoxyalkylen-Diol-Verbindungen verstanden. Als Monoalkohole sind solche mit Alkan- oder Cycloalkanresten zu nennen, vorzugsweise (C₈-C₃₂)-Alkohole und deren Isomere, beispielsweise 2-Äthylhexanol, Octanol, Nonanol, Decanol, Dodecanol, ferner Fettalkohole wie Stearyl-, Cetyl-, Ceryl-, Myricylalkohol, ®TCD-Alkohol M (Hoechst AG, 166 g/mol, OH-Zahl: 327 mg/g), Wollwachsalkohole, Cholesterole, Borneole, Isoborneole und Tallölfettalkohole.

Als monoverätherte Polyoxyalkylen-Diol-Verbindungen werden Polyoxyalkylen-Diol-Verbindungen der allgemeinen Formel I

R¹-(O-CHR²-CHR³)ₙ-OH Formel I

eingesetzt. In dieser Formel steht R¹ für einen Alkyl-, Cycloalkyl, oder Phenylrest, vorzugsweise für einen Alkylrest mit 1 bis 12, insbesondere 1 bis 4 Kohlenstoffatomen, R² und R³ stehen für Wasserstoff oder Alkylreste mit 1 bis 4 Kohlenstoffatomen und n bedeutet 1 bis 10, vorzugsweise 1 bis 4. Als Beispiele derartiger Verbindungen seien Methylglykol, Äthylglykol, Butylglykol, Methyldiglykol, Äthyldiglykol, Butyldiglykol, Methyltriglykol, Äthyltriglykol, Butyltriglykol, Methyltetraglykol, Äthyltetraglykol, Butyltetraglykol, ®Polyglykol M-250 (Hoechst AG, molare Masse 260 bis 275 g/mol, OH-Zahl 204 bis 215 mg/g), ®Polyglykol M-350 (Hoechst AG, molare Masse 335 bis 365 g/mol, OH-Zahl 154 bis 167 mg/g), Propylenglykolmethyläther, Dipropylenglykolmethyläther, Tripropylenglykolmethyläther, Propylenglykol-n-butyläther, Dipropylenglykol-n-butyläther, Tripropylenglykol-n-butyläther und Propylenglykolphenyläther genannt.

Als Monohydroxyverbindungen gelten im Rahmen dieser Erfindung auch cyclische Ester, die unter Ringöffnung reagieren, mit bevorzugt vier oder mehr Kohlenstoffatomen im Ring, wobei die Kohlenstoffatome des Rings anstelle von Wasserstoff auch andere Substituenten wie Alkyl, Cycloalkyl, Aryl, Aralkyl, Alkoxy enthalten können. Genannt seien Monoalkyl-substituierte ε-Caprolactone wie Monomethyl-, Monoäthyl-, Monopropyl-, Monoisopropyl-, Monoäthylhexyl-, Monodecyl-, Monododecyl-ε-caprolacton; weiterhin Dialkyl-ε-caprolactone, bei denen sich die zwei Alkylgruppen an dem gleichen oder an zwei unterschiedlichen, jedoch nicht aber beide am ε-C-Atom befinden; weiterhin Trialkyl-ε-caprolactone, in denen zwei oder drei C-Atome im Ring substituiert sind, so lange sich am ε-C-Atom nicht zwei Substituenten befinden; weiterhin Alkoxy-ε-caprolactone wie Methoxy- und Äthoxy-ε-caprolacton; weiterhin Cycloalkyl-, Aryl- und Aralkyl-ε-caprolactone wie Cyclohexyl-, Phenyl- und Benzyl-ε-caprolacton. Bevorzugt ist das unsubstituierte ε-Caprolacton.

Andere cyclische Ester, die im Rahmen der Erfindung eingesetzt werden können und zumindest einen zur Ringöffnung befähigten inneren Ester enthalten, sind γ-Butyrolacton, γ-Valerolacton, Äthylencarbonat, Tetramethylencarbonat, 2,2-Dimethyl-4-phenyl-1,3-dioxolan-5-on, α-n-Propyl-δ-valerolacton, δ,δ-Dimethyl-δ-valerolacton, 3-Äthyl-1,4-dioxan-2-on, 3,3,6-Trimethyl-1,4-dioxan-2-on, Tetramethylglykolid, Tetraphenylglykolid, 3-Oxa-ε-caprolacton, β-Propiolacton, α,α-Bis(chlormethyl)propiolacton, β-Butyrolacton, Pivalolacton (PVL), Thiobutyrolacton (TBL), δ-Valerolacton (DVL), α,β,γ-Trimethory-δ-valerolacton, 1,4-Dithian-2,5-dion, Trimethylencarbonat, Neopentylcarbonat, Äthylenoxolan, β-Methyl-ε-isopropyl-ε-caprolacton, Propylenoxolan, 4-Hydroxycyclohexancarbonsäurelacton, cis-Disalicylid und Trisalicyclid, sowie deren Mischungen. Bevorzugte Verbindungen sind γ-Butyrolacton, δ-Valerolacton, Pivalolacton, Thiobutyrolacton, β-Butyrolacton, ε-Caprolacton sowie deren Mischungen.

Der Massenanteil dieser Estergruppen-haltigen Comonomere A3 in der gesamten Masse der Monomeren von A beträgt vorzugsweise 0 bis 25 %, insbesondere 1 bis 15 %, besonders bevorzugt 2 bis 10 %.

Als weitere Comonomere A4 können (gegebenenfalls N-alkylierte mit 1 bis 8 Kohlenstoffatomen im Alkylrest) Amide und Nitrile von olefinisch ungesättigten Carbonsäuren, Vinylester von gesättigten aliphatischen linearen oder verzweigten Carbonsäuren mit 1 bis 20 Kohlenstoffatomen, olefinisch ungesättigte Sulfon- und Phosphonsäuren, N-Vinyl- oder N-Allylamide oder -lactame von gesättigten aliphatischen Carbonsäuren mit 1 bis 12 Kohlenstoffatomen, sowie stickstoffhaltige Heterocyclen, die an einem Stickstoffatom einen Vinyl- oder Allylrest tragen, jeweils allein oder in Mischung eingesetzt werden. Beispiele sind Acrylamid, Methacrylarnid, 2-Acrylamido-2-methylpropansulfonsäure, Acrylamidosulfonsäure, Vinylacetat, Vinylsulfonsäure, Allylsulfonsäure, Vinylphosphonsäure, Allylphosphonsäure, Acrylnitril, Methacrylnitril, Dimethylaminoäthylacrylat, Diäthylaminoäthylacrylat, Diäthylaminoäthylmethacrylat, N-Vinylpyrrolidon, N-Vinylformamid, N-Vinylimidazol, N-Vinylimidazolin, 1-Vinyl-2-methyl-2-imidazolin. Die basischen Acrylate, beispielsweise Diäthylaminoäthylacrylat, werden mit Säure neutralisiert, gegebenenfalls mit Säuregruppen-haltigen Monomeren, oder auch quaternisiert und dann der Copolymerisation zugeführt. Außerdem können Vinylester von α,α-Dialkylalkanmonocarbonsäuren, beispielsweise Vinylester der Versaticsäure, aber auch Vinylacetat und Vinylpropionat verwendet werden. Diese modifizierenden Monomere A4 dienen lediglich zur Erzielung besonderer Eigenschatten und sind in Massenanteilen von 0 bis 10 %, vorzugsweise 1 bis 4 %, in der Monomermischung des Polymeren A beteiligt.

Die Synthese des Polymeren A wird üblicherweise bei Temperaturen von 10 bis 150 °C, vorzugsweise bei 70 bis 110 °C, insbesondere bei 80 bis 95 °C, durchgeführt. Vorteilhaft wird bei konstanter Temperatur unter Normaldruck, aber auch mit Überdruck, vorzugsweise bis 1,5 MPa (15 bar), insbesondere bis 0,5 MPa (5 bar), gearbeitet.

Die Polymerisation wird mit geeigneten Initiatoren durchgeführt, die allgemein für radikalisch wäßrige Emulsionspolymerisation verwendet werden. Üblicherweise handelt es sich dabei um wasserlösliche radikalbildende Verbindungen, beispielsweise Wasserstoffperoxid, Peressigsäure, Perbenzoesäure sowie Peroxodisulfate, beispielsweise Kalium- oder Ammoniumperoxodisulfat, Perphosphate, Peroxycarbonate und organische Hydroperoxide, wie tert.-Butylhydroperoxid. Mit Vorteil werden auch kombinierte Systeme verwendet, die aus wenigstens einem organischen Reduktionsmittel und wenigstens einem Peroxid und/oder Hydroperoxid (sog. Redox-Systeme) zusammengesetzt sind, z.B. Natriumpersulfat und Natriumformaldehydsulfoxylat oder tert.-Butylhydroperoxid und das Natriumsalz der Hydroxymethansulfinsäure oder Wasserstoffperoxid und Ascorbinsäure. Andere geeignete Redoxkatalysatorsysteme sind beispielsweise Cumolhydroperoxid und Natriummetabisulfit oder Schwefeldioxid und Ammoniumpersulfat.

Bevorzugt sind auch Redoxsysteme, die neben dem Reduktionsmittel und der Peroxoverbindung eine geringe Menge einer im Polymerisationsmedium löslichen Metallverbindung enthalten, deren metallische Komponente in mehreren Wertigkeitsstufen auftreten kann, z.B. Ascorbinsäure/Eisen(II)sulfat/Wasserstoffperoxid, wobei anstelle von Ascorbinsäure auch häufig das Natriumsalz der Hydroxymethansulfinsäure, Natriumsulfit oder Natriumhydrogensulfit und anstelle von Wasserstoffperoxid häufig Alkalimetallperoxodisulfate und/oder Ammoniumperoxodisulfate angewendet werden. Anstelle eines wasserlöslichen Eisen(II)-Salzes wird häufig auch ein Vanadium-Salz oder eine Kombination aus wasserlöslichen Eisen- und Vanadium-Salzen benutzt.

Geeignet als Initiatoren sind auch Azo-Verbindungen, wie 4,4-Azo-bis-(cyanopentansäure). Die Katalysatoren werden in üblichen katalytisch wirksamen Konzentrationen verwendet. Diese liegen im allgemeinen bei Massenanteilen von 0,01 bis 4,0 %, bezogen auf die Masse der Dispersion. Bevorzugt beträgt der Massenanteil der eingesetzten radikalischen Initiatorsysteme, bezogen auf die Gesamtmenge der zu polymerisierenden Monomeren, 0,1 bis 2%.

Die Polymerisationsinitiatoren können in dem Fachmann bekannter Weise in Abhängigkeit von ihrer Art auf einmal ins Polymerisationsgefäß vorgelegt und/oder diesem nach Maßgabe ihres Verbrauchs, d.h. gemäß Polymerisationsfortschritt, kontinuierlich zugegeben werden.

In besonderen Ausführungsformen können weitere für die Emulsionspolymerisation übliche Komponenten verwendet werden. Dies sind beispielsweise pH-Puffer und beliebige andere Bestandteile, die neben dem erfindungsgemäßen Säuregruppen-haltigen Polymer A in der Reaktionsmischung mit verwendet werden können. Geeignete Puffersubstanzen sind Salze wie NaHCO₃, Na₂CO₃, Natriumacetat, Na₂HPO₄/NaH₂PO₄ oder andere Phosphate, Carbonate und Citrate. Derartige Additive können in Massenanteilen bis zu 3 % in der Dispersion enthalten sein. Mit Vorteil wird bei der Emulsionspolymerisation neben Einstellung einer Start-Polymerkonzentration eine Vorpolymerisation von Massenanteilen von 1 bis 15 % der Initiator und Monomerenmenge durchgeführt, um die Qualität der Dispersion, insbesondere bezüglich Transparenz und Viskosität, exakter einzustellen (Entkopplung Polymerisatteilchenbildungsphase / Polymerisatteilchenwachstumsphase durch die Teilung des Polymerisationsprozesses).

Zur Steuerung der Copolymerisation kann optional mit Zusatz der oben genannten Polyoxyalkylenverbindungen, aber auch mit deren endständig nicht verätherten Typen (Polyoxyalkylenglykole) gearbeitet werden. Als Polyoxyalkylenverbindungen sind bevorzugt Polypropylenoxid-Derivate einzusetzen wie z.B. Dipropylenglykolmonomethyläther (®Dowanol DPM).

Falls erforderlich, können zur Einstellung des Polymerisationsgrades die bekannten Regler verwendet werden, beispielsweise solche auf Basis organischer Thioverbindungen. Dabei sind sowohl hydrophobe, wie z.B. Laurylmercaptan, oder auch hydrophile Thioverbindungen, wie z.B. kurzkettige Mercaptopropionsäureester, einsetzbar.

Die Säuregruppen-haltigen Polymere A lassen sich nach zumindest teilweiser Neutralisation sehr vorteilhaft als Bindemittel für Papier- und Holzbeschichtungen oder als Stabilisatoren für Emulsionspolymerisation verwenden. Im allgemeinen ist es dabei ausreichend, eine Teilneutralisation von 50 bis 95 % durchzuführen, bevorzugt ist aber eine Überschuß-Neutralisation aufeinen pH-Wert oberhalb von 7, vorzugsweise bis 9,5. Als Neutralisationsmittel werden Basen verwendet, wie Ammoniak, Alkalihydroxid (NaOH, KOH), Erdalkalihydroxide wie Ca(OH)₂, amphotere Oxide wie ZnO, Metallcarbonate, Metallhydrogencarbonate, oder Amine, beispielsweise Äthanolamin, 2-Amino-2-methyl-1-propanol, Diäthanolamin, Triäthylamin, Triäthanolamin, Morpholin, 2-Amino-1-methyl-1-propanol, N,N-Dimethyläthanolamin oder 2-Dimethylamino-2-methyl-1-propanol.

Erfindungsgemäß enthalten die Kunstharzmischungen neben den Säuregruppen-haltigen Polymeren A optional auch wasserunlösliche Polymere B. Die Herstellung der Polymere B erfolgt über radikalisch initiierte Emulsionspolymerisation in Gegenwart einer wäßrigen Lösung oder Dispersion von zumindest teilneutralisiertem Säuregruppen-haltigem Polymer A. Das Säuregruppen-haltige Polymer A sollte in einer Menge vorhanden sein, die ausreichend ist, die erwünschten Emulgiereffekte herbeizuführen. Andererseits sollte, sowohl aus wirtschaftlichen Gründen als auch aus Gründen der Beeinflussung der anwendungstechnischen Eigenschaften der herzustellenden Polymermischungen, der Anteil der Polymere A nicht zu hoch sein. Es wird deshalb ein Massenanteil an Säuregruppen-haltigem Harz A von 4 bis 56 %, insbesondere 10 bis 50 % eingesetzt, bezogen auf die Summe der Massen der Säuregruppen-haltigen Polymere A und der Polymere B. Sehr gute Ergebnisse werden erzielt, wenn Massenanteile von 12 bis 42 % von A eingesetzt werden.

Verfahren zur Emulsionspolymerisation sind dem Fachmann bekannt. Üblicherweise zeichnen sie sich dadurch aus, daß in wäßriger Phase in Gegenwart von Radikalstartern eine radikalische Polymerisation von äthylenisch ungesättigten Monomeren durchgeführt wird. Die genannten Komponenten können auf verschiedene Weise in die Emulsionspolymerisation eingebracht werden. Bei Gegenwart der erfindungsgemäßen Säuregruppen-haltigen Polymeren A in der Emulsionspolymerisation kann auf die Gegenwart von niedermolekularen Tensiden und auf Schutzkolloide verzichtet werden. Die wäßrige Phase wird üblicherweise zum größten Teil vorgelegt, wobei eine anteilige Zugabe von Wasser während der Reaktion in Form einer Radikalstarterlösung oder Monomerpräemulsion möglich ist. Die Säuregruppen-haltigen Polymere A können in Lösung vollständig oder teilweise vorgelegt werden, im letzteren Fall wird der Rest während der Polymerisation zudosiert. Die Monomere können vollständig vorgelegt werden oder in reiner Form oder als Präemulsion mit Säuregruppen-haltigem Polymer A in Wasser zudosiert werden. Der Radikalstarter wird meistens teilweise vorgelegt und teilweise als wäßrige Lösung zudosiert. Als Vorlage wird die Mischung bezeichnet, die vor Einstellung der Reaktionstemperatur von üblicherweise 20 bis 99 °C in den Reaktor eingebracht wird. Im allgemeinen arbeitet man bei Temperaturen zwischen Raumtemperatur und 100 °C. Die Anwendung von vermindertem und erhöhtem Druck ist möglich, so daß die Polymerisationstemperatur auch 100 °C überschreiten und je nach Druck bis zu 130 °C und mehr betragen kann. Die Polymerisation wird meistens durch thermische Zersetzung der Radikalstarter oder durch Redoxsysteme eingeleitet und kann als beendet angesehen werden, wenn der größte Teil der durch radikalische Kettenreaktion umsetzbaren Monomeren abreagiert ist. Üblicherweise bleiben bei diesem Verfahren Massenanteile von ca. 0,001 bis 0,1 % nicht umgesetzte Monomere ("Restmonomere") zurück. Weitere Verfahren bzw. Verfahrensvarianten werden beispielsweise in Ullmann, Enzyklopädie der technischen Chemie, 4. Auflage, Verlag Chemie, Weinheim (1980), Band 19, Seiten 132 ff. sowie in Encyclopedia of Polymer Science and Engineering, Volume 6, Wiley & Sons, New York 1986, Seiten 1-51, ausführlich geschildert.

Das Polymer B der Dispersion wird durch gemeinsame oder konsekutive Polymerisation von Monomeren erzeugt, die wenigstens zu einem erheblichen Teil in Wasser schwerlöslich sind und auch bei Änderung des pH-Wertes schwerlöslich bleiben. Unter schwerlöslich wird eine Löslichkeit von Massenanteilen des zu lösenden Stoffes, bezogen auf die Masse der Lösung, von weniger als 10 %, insbesondere weniger als 5 %, bei 25 °C verstanden. Der Anteil der schwerlöslichen Monomeren muß wenigstens so groß sein, daß das entstehende Emulsionspolymerisat unter den Polymerisationsbedingungen in der Wasserphase unlöslich ist und in Form dispergierter Teilchen vorliegt. Im Sinne der Erfindung werden vorzugsweise solche Mischungen verwendet, die zu Massenanteilen von mindestens 70 % und insbesondere zu mindestens 90 % aus schwerlöslichen Monomeren bezogen auf die Masse der Monomermischung bestehen.

Geeignete Monomere enthalten mindestens eine äthylenisch ungesättigte Gruppe. Die Begriffe äthylenisch ungesättigt, vinylisch ungesättigt und α,β-ungesättigt werden hier synonym verwendet. Dem Fachmann ist bekannt, daß derartige Monomere sich unter den Bedingungen der Emulsionspolymerisation in einem wäßrigen Medium zu Polymeren verbinden lassen. Die geeigneten Monomere sind ausgewählt aus Vinylhalogeniden, Vinylestern von gesättigten organischen Säuren mit 1 bis 20 Kohlenstoffatomen, Styrol, ein- und mehrfach alkyl- oder arylsubstituierten Styrolen mit 1 bis 8 Kohlenstoffatomen im Alkylrest oder 5 bis 10 Kohlenstoffatomen im Arylrest, mit einer oder mehreren Gruppen ausgewählt aus Halogenen, Pseudohalogenen, Aminogruppen, Hydroxylgruppen und Nitrogruppen substituiertem Styrol, Estern von linearen, cyclischen oder verzweigten aliphatischen Alkoholen mit 1 bis 20 Kohlenstoffatomen und α,β-olefinisch ungesättigten Carbonsäuren, den entsprechenden Diestern der entsprechenden Dicarbonsäuren sowie Hydroxyalkylestern von linearen, cyclischen oder verzweigten aliphatischen zwei- oder mehrwertigen Alkoholen mit 1 bis 20 Kohlenstoffatomen und α,β-olefinisch ungesättigten Carbonsäuren. Die Arylreste bei den substituierten Styrolen können ihrerseits ebenfalls alkylsubstituiert sein, mit 1 bis 8 Kohlenstoffatomen im Alkylrest. Unter Pseudohalogenen werden hier die Cyanogruppe und die Thiocyanogruppe verstanden. Zu den geeigneten Vinylverbindungen gehören beispielsweise Vinylchlorid sowie Vinylester von gesättigten organischen Säuren wie Vinylacetat, Vinylpropionat, Vinylester der Versaticsäure, aber auch Vinylfettsäureester wie Vinyllaurat. Geeignete Styrolverbindungen sind Styrol, Vinyltoluol und dessen Isomermischungen, α-Methylstyrol, Äthylstyrol, iso-Propylstyrol, tert.-Butylstyrol, 2,4-Dimethylstyrol, Diäthylstyrol, o-Methyl-p-iso-propylstyrol, Halogenstyrole wie Chlorstyrol, Fluorstyrol und Jodstyrol, 2,4-Cyanostyrol, Hydroxystyrol, Nitrostyrol, Aminostyrol und Phenylstyrol. Bevorzugt sind insbesondere Styrol, Vinyltoluol und α-Methylstyrol. Als geeignete Acrylate seien beispielhaft Acrylsäure-, Methacrylsäure- und Crotonsäure-Ester von linearen oder verzweigten Alkoholen mit 1 bis 30 Kohlenstoffatomen, bevorzugt 1 bis 12 Kohlenstoffatomen genannt, die bereits oben aufgezählt wurden. Geeignet sind auch Ester, die eine oder mehrere Hydroxylfunktionen enthalten, wie Hydroxyäthylacrylat, Hydroxyäthylmethacrylat und Glycerinrnonomethacrylat, und auch Ester, die oben bei der Herstellung von Polymer A genannt wurden. Bei der Emulsionspolymerisation können selbstverständlich auch Mischungen derartiger äthylenisch ungesättigter Monomere polymerisiert werden, soweit sie sich zur Copolymerisation eignen.

Werden weitgehend beständige Beschichtungen verlangt, können neben den bereits aufgeführten Monomeren beim Aufbau der Polymere A oder Polymere B auch weitere Monomere in Massenanteilen von 0 bis 7 % bezogen auf die Masse der Monomermischung eingesetzt werden, die während der Filmbildung eine Vernetzung der Polymeren bewirken. Diese Monomere sind ausgewählt aus Carbonylgruppen-haltigen Vinylmonomeren sowie Amin- oder Hydrazingruppenhaltigen Vinylmonomeren.

Beispielhaft genannt seien Carbonylgruppen aufweisende Monomere wie Acrolein, Methacrolein, Diacetonacrylamid und -methacrylamid, 2-Acetoacetoxyäthylmethacrylat sowie Acetessigsäurevinylester. Der Einbau dieser Monomere führt dann zu einer Nachvernetzung, wenn das erfindungsgemäße Polymer A oder die erfindungsgemäße Polymermischung aus A und B gleichzeitig eine entsprechende Menge einer Polyaminverbindung oder bevorzugt einer Hydrazinverbindung zugesetzt enthält. Als solche eignen sich insbesondere die Dihydrazide von aliphatischen Dicarbonsäuren mit 2 bis 12 C-Atomen. Beispiele hierfür sind Oxalsäuredihydrazid, Malonsäuredihydrazid, Bernsteinsäuredihydrazid, Glutarsäuredihydrazid, Adipinsäuredihydrazid oder Sebacinsäuredihydrazid. Ebenso ist eine Vernetzung möglich durch Einbau von Aminogruppen- oder Hydrazingruppen-haltigen Vinylmonomeren, wobei Diketone oder Dialdehyde als Vernetzer zugesetzt werden, wie beispielsweise Glyoxal.

Des weiteren eignen sich zur Nachvernetzung Monomere mit hydrolysierbaren Si-organischen Bindungen im Molekül, wie z.B. Methacryloxypropyltrimethoxysilan oder Vinyltrimethoxysilan. Polymerbausteine dieser Art sind z.B. in DE-A 4 341 260 beschrieben.

Eine andere Art der Nachvernetzung der Polymere A kann beispielsweise auch durch Zusatz mehrwertiger bzw. mehrbindiger Kationen aufweisender Metallsalze bewirkt werden (z.B. Mg-, Ca-, Zn- oder Zr-, aber auch Li-Salze).

Weiterhin eignen sich auch Epoxy-, Hydroxyl-, und/oder N-Alkylolgruppen aufweisende Monomere wie z.B. Glycidylacrylat, N-Methylolacrylamid und -methacrylamid zur Einführung von nachträglich vernetzbaren Gruppen.

Die Polymerisation zum Polymeren B wird mit geeigneten Initiatoren durchgeführt, die bereits oben beschrieben wurden. Die oben genannten Verfahrensvarianten, wie Redoxkatalyse, Gegenwart von Puffern, Art der Monomer- und Initiatordosierung werden hier ebenfalls angewandt.

Ein weiterer Gegenstand der Erfindung ist die Verwendung der erfindungsgemäßen wäßrigen Tensid-freien Polymere A und Polymermischungen A mit B zur Herstellung von Bindemitteln für Papier- (z.B. auch Druckfarben, Drucklacke und Papierstreichmassen) und Holzbeschichtungen auf Wasserbasis.

Dabei besteht als wesentliche Aufgabe auf dem Feld der Holzbeschichtungen, einen schnelltrocknenden und -schleifbaren Primer, einen Schleifgrund oder einen Holzspachtelkitt zur Substratvorbereitung für eine nachfolgende Hochglanzlackierung zur Verfügung zu stellen.

Als wesentliche Aufgabe auf dem Feld der Papierbeschichtungen werden wäßrige Bindemittel gesucht für Druckfarben und Drucklacke im in-line oder off-line Bedrucken von Papier, Pappe, Kartonagen, Folien und dergleichen, beispielsweise mit dem Farbwerk einer Bogen- oder Rollenoffsetmaschine, aus Feuchtwerken, separaten Lackieraggregaten von Bogen- oder Rollenoffset-Druckmaschinen, Bogenlackiermaschinen, Tief- und Flexodruckmaschinen.

Die erfindungsgemäßen wäßrigen Dispersionen der Polymere A und der Polymermischungen von A und B können als Bindemittel allein oder in Kombination mit anderen Bindemitteln für diese Zwecke vorteilhaft eingesetzt werden.

Bei Verwendung der erfindungsgemäßen Polymere A oder Polymermischungen A und B in Form von wäßrigen Dispersionen als Bindemittel in einem Überdruckmittel wird ein Kleb- sowie Oberflächenschutz von Druckerzeugnissen erreicht, von nach bekannten Druckverfahren (Offset, Tiefdruck, Hochdruck, Flexodruck oder auch Spezialdruckverfahren entsprechend DE-A 42 05 713) bereits bedruckten Oberflächen. Die erfindungsgemäßen Polymere A und Polymermischungen von A und B lassen sich auch in wäßrigen Bindemitteln zur Herstellung von Zwischenlagenschutzschichten zur Trennung verschiedener Farbautträge einsetzen.

Bei der Verwendung der erfindungsgemäßen Tensid-freien Polymere A und Polymermischungen von A und B als Bindemittel oder Bindemittelbestandteil für wäßrige Holz- und Papierbeschichtungen beträgt deren Feststoff-Massenanteil im allgemeinen 30 bis 80 %.

Die genannten Primer, Schleifgründe, Kitte, Spachtel, Streichmassen, Lacke oder Farben enthalten Massenanteile von 1 bis 95 % der erfindungsgemäßen Tensid-freien Polymere A und Polymermischungen von A und B sowie 0 bis 60 % Glykole oder Glykoläther (wie ®Cellosolve-Typen EE, EP, EB, oder EH, ®Carbitol-Typen DM, DE, DB, DH oder EHC sowie Propylenglykol-n-butyläther, Dipropylenglykol-n-butyläther, Dipropylenglykolmethyläther, Tripropylenglykolmethyläther, Propylenglykolphenyläther oder Propylenglykol-tert.-butyläther), 0 bis 30 % Netzmittel, 0 bis 40 % Neutralisationsmittel (Basen), 0 bis 30 % natürliche und/oder synthetische Wachse, 0 bis 3 % Entschäumer, 0 bis 80 % Wasser, 0 bis 60 % Pigmente, 0 bis 2 % Additive zur Verbesserung der Abriebfestigkeit, beispielsweise ®Byk 301 (Byk-Mallinckrodt), 0 bis 3 % Additive zur Verbesserung der Kratzbeständigkeit, beispielsweise ®Aqua Polyfluo (Micro Powders), 0 bis 1,5 % Levelling-Agenzien, beispielsweise ®Triton X 200 (Rohm & Haas) sowie 0 bis 5 % Weichmacher, beispielsweise Triäthylcitrat, Dibutylphthalat, Tributoxyäthylphosphat oder Trimethylpentandioldiisobutyrat, die auch zur gezielten Verbesserung der Sperrschichteigenschaften eingesetzt werden. Das Pigment/Bindemittel-Massenverhältnis bei Anreibeoperationen beträgt zwischen 5 : 95 und 95 : 5 bevorzugt 30 : 70 bis 70 : 30. Für die Anwendung als Pigmentanreibekomponenten sind auch Festkörper-Massenanteile von größer 30 % zweckmäßig. Für den Aufbau dieser Stammfarben, pigmentierten Primern oder Druckfarben sind auch Mischungen verschiedener Typen von Lösungsmittel-freien Polymeren und Polymer-Mischungen zweckmäßig. Zur Einarbeitung von Pigmenten (beispielsweise Titandioxid, Buntpigmente, synthetische Ruße), Füllstoffen (beispielsweise Talkum, Chinaclay, Wachse), Farbstoffen und Verlaufsmitteln in die Lösungen und/oder Dispersionen und/oder deren Mischungen und/oder deren Verdünnungen sind die allgemein üblichen Mahl-, Misch-, Knet- und Anreibegeräte optional in Gegenwart üblicher Dispergierhilfsmittel einsetzbar.

Die Herstellung der erfindungsgemäßen Tensid-freien Polymere A und Polymer-Mischungen von A und B sowie ihre bevorzugte Verwendung für Holzbeschichtungen wird durch nachfolgende Beispiele erläutert. Die in den Beispielen aufgeführten Teile und Prozentangaben sind Massenanteile, soweit nicht anders vermerkt. Die angegebenen Säurezahlen (zur Neutralisation erforderliche Masse an KOH in mg pro Masse des Gemisches in g) sind stets auf die Masse des Polymer-Wasser-Gemisches bezogen. Alle Synthese-Beispiele sind unter Schutzgas, bevorzugt Stickstoff, in Glas- oder Stahlapparaturen durchgeführt worden.

### BEISPIELE

### Beispiel 1

In eine auf 90 °C temperierte Mischung aus entionisiertem Wasser (605 g) und tert.-Butylhydroperoxid (3 g) wird im Parallel-Zulauf eine Mischung aus Styrol (196 g), Acrylsäure (51 g) und Laurylmercaptan (2,5 g) sowie synchron dazu eine Lösung von Ammoniumperoxodisulfat (3 g) in entionisiertem Wasser (80 g) innerhalb von 4 Stunden dosiert. Anschließend stellt man die Mischung mit entionisiertem Wasser (15 g) auf den gewünschten Feststoff-Massenanteil ein und kühlt ab. Man erhält so ein Polymer-Wasser-Gemisch mit einer Säurezahl von ca. 39 mg/g, das nach Neutralisation mit wäßrigem Ammoniak (25 %ig, 67 g) eine feinteilige Dispersion ergibt mit einem Festkörper-Massenanteil von ca. 26 %, einer Viskosität von 35 mPa·s (Ubbelohde, 25 %ige Lösung bei 23°C) und einem pH-Wert von 8,5.

### Beispiel 2

In eine auf 90 °C temperierte Mischung aus entionisiertem Wasser (555 g), tert.-Butylhydroperoxid (3 g) und ®Dowanol DPM (Fa. DOW, Dipropylenglykolmonomethyläther, 50 g) wird im Parallel-Zulaufeine Mischung aus Styrol (82 g), ∝-Methylstyrol (93 g), Acrylsäure (77 g) und Laurylmercaptan (2 g) sowie synchron dazu eine Lösung von Ammoniumperoxodisulfat (3 g) in entionisiertem Wasser (80 g) innerhalb von 4 Stunden dosiert. Anschließend gibt man eine Lösung von Natriumdisulfit (5 g) in entionisiertem Wasser (30 g) hinzu und läßt noch mindestens eine Stunde lang reagieren, bevor auf Raumtemperatur gekühlt wird. Man erhält so ein Polymer-Wasser-Gemisch mit einer Säurezahl von ca. 62 mg/g, das nach Neutralisation mit wäßrigem Ammoniak (25 %ig, 70 g) eine feinteilige Dispersion ergibt mit einem Festkörper-Massenanteil von ca. 24 %, einer Viskosität von 14 mPa·s (Ubbelohde, 23 °C) und einem pH-Wert von 8,8.

### Beispiel 3

In eine auf 90 °C temperierte Mischung aus entionisiertem Wasser (555 g), tert.-Butylhydroperoxid (3 g) und ®Dowanol DPM (Fa. DOW, Dipropylenglykolmonomethyläther, 50 g) wird im Parallel-Zulaufeine Mischung aus Styrol (79 g), ∝-Methylstyrol (89 g), Acrylsäure (79 g) und Laurylmercaptan (2 g) sowie synchron dazu eine Lösung von Ammoniumperoxodisulfat (3 g) in entionisiertem Wasser (40 g) innerhalb von 4 Stunden dosiert. Anschließend gibt man eine Lösung von Natriumdisulfit (5 g) in entionisiertem Wasser (45 g) hinzu und läßt noch mindestens eine Stunde lang reagieren, bevor auf Raumtemperatur gekühlt wird. Man erhält so ein Polymer-Wasser-Gemisch mit einer Säurezahl von ca. 160 mg/g, das nach Neutralisation mit Ammoniak (25 %ig, 70 g) eine feinteilige Dispersion ergibt mit einem Festkörper von ca. 24 %, einer Viskosität von 14 mPa·s (Ubbelohde, 23 °C) und einem pH-Wert von 8,8.

### Beispiel 4

Die Dispersion aus Beispiel 1 (350 g) wird mit Styrol (6 g) und Ammoniumperoxodisulfat (0,2 g) auf 90 °C erhitzt. Bei dieser Temperatur wird ca. 15 Minuten gehalten, anschließend wird innerhalb von ca. 4 Stunden eine Mischung von Styrol (275 g) und 2-Äthylhexylacrylat (70 g) sowie parallel dazu eine Lösung von Ammoniumperoxodisulfat (1,3 g) in entionisiertem Wasser (396 g) dosiert. Man läßt ca. 1 Stunde nachreagieren, gegebenenfalls unter Zugabe eines Redoxsystems, kühlt ab, stellt auf den gewünschten Festkörper-Massenanteil ein (Zugabe von ca. 8 g entionisiertem Wasser) und erhält so nach Filtration über ein Filter mit einer Porenweite von 25 µm eine stippenfreie Dispersion mit einem Festkörper-Massenanteil von ca. 41 %, einem pH-Wert von 8,3 und einer Viskosität von 270 mPa·s (Ubbelohde).

### Beispiel 5 a

Die Dispersion aus Beispiel 2 (350 g) wird mit Styrol (6 g), entionisiertem Wasser (3 g) und Arnmoniumperoxodisulfat (0,2 g) auf 90 °C erhitzt. Bei dieser Temperatur wird ca. 15 Minuten gehalten, anschließend wird innerhalb von ca. 4 Stunden eine Mischung von Styrol (275 g) und 2-Äthylhexylacrylat (70 g) sowie parallel dazu eine Lösung von Ammoniumperoxodisulfat (1,2 g) in entionisiertem Wasser (286 g) dosiert. Man läßt ca. 1 Stunde nachreagieren, gegebenenfalls unter Zugabe eines Redoxsystems, kühlt ab, stellt auf den gewünschten Festkörper-Massenanteil ein (Zugabe von ca. 8 g entionisiertem Wasser) und erhält so nach Filtration über ein Filter mit einer Porenweite von 25 µm eine stippenfreie Dispersion mit einem Festkörper-Massenanteil von ca. 44 %, einem pH-Wert von 8,4 und einer Viskosität von 410 mPa·s (Ubbelohde, 23 °C).

### Beispiel 5 b

Die Dispersion aus Beispiel 2 (209 g) wird mit Styrol (3,5 g), entionisiertem Wasser (1,8 g) und Ammoniumperoxodisulfat (0,15 g) auf 90 °C erhitzt. Bei dieser Temperatur wird ca. 15 Minuten gehalten, anschließend wird innerhalb von ca. 4 Stunden eine Mischung von Styrol (164 g), Diacetonacrylamid (3 g) und 2-Äthylhexylacrylat (42 g) sowie parallel dazu eine Lösung von Ammoniumperoxodisulfat (0,7 g) in entionisiertem Wasser (171 g) dosiert. Man läßt ca. 1 Stunde nachreagieren, gegebenenfalls unter Zugabe eines Redoxsystems, kühlt ab, gibt eine Lösung von Adipinsäuredihydrazid (1,4 g) in entionisiertem Wasser (15 g) hinzu, stellt auf den gewünschten Festkörper-Massenanteil ein (Zugabe von ca. 5 g entionisiertem Wasser) und erhält so nach Filtration über ein Filter mit einer porenweite von 25 µm eine stippenfreie Dispersion mit einem Festkörper-Massenanteil von ca. 42 %, einem pH-Wert von 8,3 und einer Viskosität von 360 mPa·s (Ubbelohde, 23 °C).

### Beispiel 5c

Die Dispersion aus Beispiel 2 (250 g) wird mit Styrol (4 g), entionisiertem Wasser (2 g) und Ammoniumperoxodisulfat (0,15 g) auf 90 °C erhitzt. Bei dieser Temperatur wird ca. 15 Minuten gehalten, anschließend wird innerhalb von ca. 4 Stunden eine Mischung von Styrol (196 g) und 2-Äthylherylacrylat (59 g) sowie parallel dazu eine Lösung von Ammoniumperoxodisulfat (0,8 g) in entionisiertem Wasser (204 g) dosiert. Man läßt ca. 1 Stunde nachreagieren, gegebenenfalls unter Zugabe eines Redoxsystems, kühlt ab, stellt auf den gewünschten Festkörper-Massenanteil ein (Zugabe von ca. 6 g entionisiertem Wasser) und erhält so nach Filtration über ein Filter mit einer Porenweite von 25 µm eine stippenfreie Dispersion mit einem Festkörper-Massenanteil von ca. 44 %, einem pH-Wert von 8,5 und einer Viskosität von 430 mPa·s (Ubbelohde, 23 °C).

### Beispiel 5d

Die Dispersion aus Beispiel 2 (350 g) wird mit Styrol (6 g), entionisiertem Wasser (5 g) und Ammoniumperoxodisulfat (0,23 g) auf 90 °C erhitzt. Bei dieser Temperatur wird ca. 15 Minuten gehalten, anschließend wird innerhalb von ca. 4 Stunden eine Mischung von Styrol (275 g), Diacetonacrylamid (5,4 g) und 2-Äthylhexylacrylat (82 g) sowie parallel dazu eine Lösung von Ammoniumperoxodisulfat (1,2 g) in entionisiertem Wasser (286 g) dosiert. Man läßt ca. 1 Stunde nachreagieren, gegebenenfalls unter Zugabe eines Redoxsystems, kühlt ab, gibt eine Lösung von Adipinsäuredihydrazid (2,4 g) in entionisiertem Wasser (15 g) hinzu, stellt auf den gewünschten Festkörper-Massenanteil ein (Zugabe von ca. 6 g entionisiertem Wasser) und erhält so nach Filtration über ein Filter mit einer Porenweite von 25 µm eine stippenfreie Dispersion mit einem Festkörper-Massenanteil von ca. 43 %, einem pH-Wert von 8,8 und einer Viskosität von 530 mPa·s (Ubbelohde, 23 °C).

### Beispiel 5e

Die Dispersion aus Beispiel 2 (350 g) wird mit Styrol (6 g), entionisiertem Wasser (6 g) und Ammoniumperoxodisulfat (0,2 g) auf 90 °C erhitzt. Bei dieser Temperatur wird ca. 15 Minuten gehalten, anschließend wird innerhalb von ca. 4 Stunden eine Mischung von Styrol (275 g) und 2-Äthylhexylacrylat (110 g) sowie parallel dazu eine Lösung von Ammoniumperoxodisulfat (1,3 g) in entionisiertem Wasser (286 g) dosiert. Man läßt ca. 1 Stunde nachreagieren, gegebenenfalls unter Zugabe eines Redoxsystems, kühlt ab, stellt auf den gewünschten Festkörper-Massenanteil ein (Zugabe von ca. 6 g entionisiertem Wasser) und erhält so nach Filtration über ein Filter mit einer Porenweite von 25 µm eine stippenfreie Dispersion mit einem Festkörper-Massenanteil von ca. 46 %, einem pH-Wert von 8,8 und einer Viskosität von 620 mPa·s (Ubbelohde, 23 °C).

### Beispiel 6

Die Dispersion aus Beispiel 3 (350 g) wird mit Styrol (6 g), entionisiertem Wasser (3 g) und Ammoniumperoxodisulfat (0,2 g) auf 90 °C erhitzt. Bei dieser Temperatur wird ca. 15 Minuten gehalten, anschließend wird innerhalb von ca. 4 Stunden eine Mischung von Styrol (275 g) und 2-Äthylhexylacrylat (70 g) sowie parallel dazu eine Lösung von Ammoniumperoxodisulfat (1,2 g) in entionisiertem Wasser (286 g) dosiert. Man läßt ca. 1 Stunde nachreagieren, gegebenenfalls unter Zugabe eines Redoxsystems, kühlt ab, stellt auf den gewünschten Festkörper-Massenanteil ein (Zugabe von ca. 8 g entionisiertem Wasser) und erhält so eine stippenfreie Dispersion mit einem Festkörper-Massenanteil von ca. 42 %, einem pH-Wert von 7,8 und einer Viskosität von 36 mPa·s (Ubbelohde, 23 °C).

### Beispiel 7

Eine Dispersion entsprechend Beispiel 4 (104 g) wird vorgelegt, unter Rühren wird ®Dowanol DPM (9,0 g, Dow Chemical) langsam hinzugefügt. Danach werden ®Ceridust 9615 A (3,0 g, Wachs, Hoechst AG) und ®Tego Foamex 805/50% in Wasser (0,4 g, Tego-Chemie) während 15 Minuten mit einem Dissolver eingearbeitet. Man erhält so einen wäßrigen glänzenden Schleifgrund mit einem Festkörper-Massenanteil von ca. 40 %, einer Dichte von 1,04 g/cm³, einer Auslaufzeit im 4 mm-Becher nach DIN 53211 bei 23 °C von 40 s, einer Staubtrocknungszeit (100 µm Naßfilm, 23 °C) von ca. 10 Minuten, einer Trocknungszeit bei forcierter Trocknung (100 µm Naßfilm, 60 °C) von ca. 2 Minuten und einer Blockfestigkeit bei Belastung mit 10 N/cm² bis 45 °C.

### Beispiel 8

Eine Dispersion entsprechend Beispiel 5a (97 g) wird vorgelegt, unter Rühren wird ®Dowanol DPM (8,0 g, Dow Chemical) langsam hinzugefügt. Danach werden ®Ceridust 9615 A (3,0 g, Wachs, Hoechst AG) und ®Tego Foamex 805/50% in Wasser (0,5 g, Tego-Chemie) während 15 Minuten mit einem Dissolver eingearbeitet. Man erhält so einen wäßrigen glänzenden Schleifgrund mit einem Festkörper-Massenanteil von ca. 42,5 %, einer Dichte von 1,04 g/cm³, einer Auslaufzeit im 4 mm-Becher nach DIN 53211 bei 23°C von 42 s, einer Staubtrocknungszeit (100 µm Naßfilm bei 23°C) von ca. 10 Minuten, einer Zeit für forcierte Trocknung (100 µm Naßfilm, 60°C) von ca. 2 Minuten und einer Blockfestigkeit bei einer Belastung mit 10 N/cm² bis 40°C.

### Beispiel 9

Eine Dispersion entsprechend Beispiel 6 (102 g) wird vorgelegt, ®Dowanol DPM (7,0 g, Dow Chemical) wird unter Rühren langsam hinzugefügt. Danach werden ®Ceridust 9615 A (3,0 g, Wachs, Hoechst AG) und ®Tego Foamex 805/50% in Wasser (0,4 g, Tego-Chemie) während 15 Minuten mit einem Dissolver eingearbeitet. Man erhält so einen wäßrigen glänzenden Schleifgrund mit einem Festkörper-Massenanteil von ca. 41 %, einer Dichte von 1,04 g/cm³, einer Auslaufzeit im 4 mm-Becher nach DIN 53211 bei 23 °C von 43 s, einer Staubtrocknungszeit (100 µm Naßfilm bei 23 °C) von ca. 10 Minuten, einer Zeit für forcierte Trocknung (100 µm Naßfilm, 60°C) von ca. 2 Minuten, und einer Blockfestigkeit bei Belastung mit 10 N/cm² bis 43 °C.

### Beispiel 10

Eine Dispersion entsprechend Beispiel 4 (42 g) wird vorgelegt, unter Rühren wird ®Dowanol DPM (4,0 g, Dow Chemical Europe) langsam hinzugefügt. Danach werden nacheinander ®Agitan 295 (0,2 g, Münzing Chemie GmbH), ®Kronos 2310 (15,0 g, Kronos Titan GmbH), ®Blanc fixe (15,0 g, Sachtleben Chemie GmbH), ®Mikrotalkum AT 1 (Norwegian Talc) und ®Millicarb (14,0 g, Omya) zugegeben und ca. 15 Minuten mittels eines Dissolvers oder einer Perlmühle eindispergiert. Anschließend wird ®Ceridust 9615 A (1,5 g, Wachs, Hoechst AG) während ca. 5 Minuten mit einem Dissolver eingearbeitet. Man erhält so einen wäßrigen, weiß matten Holzspachtelkitt mit einem Festkörper-Massenanteil von ca. 72 %, einer Dichte von ca. 1,55 g/cm³, einer Staubtrocknungszeit (100 µm Naßfilm, 23 °C, 50 % rel. Luftfeuchtigkeit) von ca. 2 bis 3 Minuten, einer Zeit für forcierte Trocknung (100 µm Naßfilm, 60 °C) von 2 Minuten, und einer Blockfestigkeit bei Belastung mit 10 N/cm² bis 55 °C.

### Beispiel 11

Eine Dispersion entsprechend Beispiel 5a (39 g) wird vorgelegt, unter Rühren wird ®Dowanol DPM (4,0 g, Dow Chemical) langsam hinzugefügt. Danach werden nacheinander ®Agitan 295 (0,2 g, Münzing Chemie GmbH), ®Kronos 2310 (15,0 g, Kronos Titan GmbH), ®Blanc fixe (15,0 g, Sachtleben Chemie GmbH), ®Mikrotalkum AT 1 (Norwegian Talc) und ®Mlllicarb (14,0 g, Omya GmbH) zugegeben und ca. 15 Minuten mittels eines Dissolvers oder Perlmühle eindispergiert. Anschließend wird ®Ceridust 9615 A (1,5 g, Wachs, Hoechst AG) ca. 5 Minuten mit einem Dissolver eingearbeitet. Man erhält so einen wäßrigen, weiß matten Holzspachtelkitt mit einem Festkörper-Massenanteil von ca. 75 %, einer Dichte von ca. 1,65 g/cm³, einer Staubtrocknungszeit (100 µm Naßfilm, 23 °C, 50% rel Luftfeuchtigkeit) von ca. 2 bis 3 Minuten, einer Zeit für forcierte Trocknung (100 µm Naßfilm, 60 °C) von 2 Minuten und einer Blockfestigkeit bei Belastung mit 10 N/cm² bis 50 °C.

### Beispiel 12

Eine Dispersion entsprechend Beispiel 6 (41 g) wird vorgelegt, unter Rühren wird ®Dowanol DPM (4,0 g, Dow Chemical) langsam hinzugefügt. Danach werden nacheinander ®Agitan 295 (0,2 g, Münzing Chemie GmbH), ®Kronos 2310 (15,0 g, Kronos Titan GmbH), ®Blanc fixe (15,0 g, Sachtleben Chemie GmbH), ®Mikrotalkum AT 1 (Norwegian Talc) und ®Millicarb (14,0 g, Omya GmbH) zugegeben und ca. 15 Minuten mittels eines Dissolvers oder einer Perlmühle eindispergiert. Anschließend wird ®Ceridust 9615 A (1,5 g, Wachs, Hoechst AG) ca. 5 Minuten mit einem Dissolver eingearbeitet. Man erhält so einen wäßrigen, weiß matten Holzspachtelkitt mit einem Festkörper-Massenanteil von ca. 74 %, einer Dichte von ca. 1,65 g/cm³, einer Staubtrocknungszeit (100 µm Naßfilm, 23 °C, 50 % rel Luftfeuchtigkeit) von ca. 2 bis 3 Minuten, einer Zeit für forcierte Trocknung (100 µm Naßfilm, 60 °C) von 2 Minuten und einer Blockfestigkeit bei Belastung von 10 N/cm² bis 55 °C.

## Patentansprüche

1. Tensid-freie wäßrige Lösungen oder Dispersionen von Polymeren enthaltend mindestens ein gegebenenfalls neutralisiertes oder teilneutralisiertes Säuregruppen-haltiges Polymer A, hergestellt durch radikalische Polymerisation von Carboxylgruppen-haltigen äthylenisch ungesättigten Verbindungen A1 und weiteren Carboxylgruppen-freien äthylenisch ungesättigten Verbindungen in Wasser ohne Zusatz niedermolekularer Tenside.

2. Tensid-freie wäßrige Dispersionen von Polymeren nach Anspruch 1, dadurch gekennzeichnet, daß zusätzlich mindestens ein wasserunlösliches Polymer B in Form von Latexteilchen enthalten ist, wobei die Polymeren B herstellbar sind durch radikalische Emulsionspolymerisation von äthylenisch ungesättigten Verbindungen in Gegenwart einer wäßrigen Lösung oder Dispersion von Polymeren A.

3. Tensid-freie wäßrige Lösungen oder Dispersionen von Polymeren nach Anspruch 1, dadurch gekennzeichnet, daß die Säurezahlen der Polymere A 80 bis 420 mg/g betragen.

4. Tensid-freie wäßrige Lösungen oder Dispersionen von Polymeren nach Anspruch 1, dadurch gekennzeichnet, daß die gewichtsmittlere molare Masse der Polymeren A 300 bis 100.000 g/mol beträgt.

5. Tensid-freie wäßrige Lösungen oder Dispersionen von Polymeren nach Anspruch 1, dadurch gekennzeichnet, daß der Massenanteil der Carboxylgruppen-haltigen Monomere A1 in der Monomermischung 5 bis 70 % beträgt.

6. Tensid-freie wäßrige Lösungen oder Dispersionen von Polymeren nach Anspruch 1, dadurch gekennzeichnet, daß als weitere äthylenisch ungesättigte Verbindungen neben den carboxylgruppenhaltigen Monomeren bei der Herstellung der Polymeren A hydrophobe Monomere A2 eingesetzt werden, die frei sind von Estergruppen, Amidgruppen, Nitrilgruppen, Sulfon- und Phosphonsäuregruppen, sowie heterocyclischen Ringen, mit einem Massenanteil in der Monomermischung von 30 bis 95 %.

7. Tensid-freie wäßrige Lösungen oder Dispersionen von Polymeren nach Anspruch 1, dadurch gekennzeichnet, daß als weitere äthylenisch ungesättigte Verbindungen bei der Herstellung der Polymeren A Estergruppen-haltige Monomere A3 mit einem Massenanteil bis zu 25 % eingesetzt werden.

8. Tensid-freie wäßrige Lösungen oder Dispersionen von Polymeren nach Anspruch 1, dadurch gekennzeichnet, daß als äthylenisch ungesättigte Comonomere A4 Amide, die gegebenenfalls N-alkyliert sind, mit 1 bis 8 Kohlenstoffatomen im Alkylrest, und Nitrile von olefinisch ungesättigten Carbonsäuren, Vinylester von gesättigten aliphatischen linearen oder verzweigten Carbonsäuren mit 1 bis 20 Kohlenstoffatomen, olefinisch ungesättigte Sulfon- und Phosphonsäuren, N-Vinyl- oder N-Allyl-amide oder -lactame von gesättigten aliphatischen Carbonsäuren mit 1 bis 12 Kohlenstoffatomen, sowie stickstoffhaltige Heterocyclen, die an einem Stickstoffatom einen Vinyl- oder Allylrest tragen, jeweils allein oder in Mischung mit einem Massenanteil in der Monomerenmischung bis zu 10 % eingesetzt werden.

9. Tensid-freie wäßrige Dispersionen von Polymeren nach Anspruch 2, dadurch gekennzeichnet, daß der Massenanteil der Polymeren A an der Summe der Massen der Polymere A und B 4 bis 56 % beträgt.

10. Tensid-freie wäßrige Dispersionen von Polymeren nach Anspruch 2, dadurch gekennzeichnet, daß ein Massenanteil von mindestens 70 % der zur Herstellung der Polymeren B eingesetzten Monomeren in Wasser nur soweit löslich ist, daß bei 25 °C eine Lösung dieser Monomeren Massenanteile von weniger als 10 % des betreffenden Monomeren in wäßriger Lösung enthält.

11. Tensid-freie wäßrige Dispersionen von Polymeren nach Anspruch 2, dadurch gekennzeichnet, daß die zur Herstellung der Polymeren B verwendeten äthylenisch ungesättigten Monomere ausgewählt sind aus Vinylhalogeniden, Vinylestern von gesättigten organischen Säuren mit 1 bis 20 Kohlenstoffatomen, Styrol, ein- und mehrfach alkyl- oder aryl-substituierten Styrolen mit 1 bis 8 Kohlenstoffatomen im Alkylrest oder 5 bis 10 Kohlenstoffatomen im Arylrest, mit einer oder mehreren Gruppen ausgewählt aus Halogenen, Pseudohalogenen, Aminogruppen, Hydroxylgruppen und Nitrogruppen substituiertem Styrol, Estern von linearen, cyclischen oder verzweigten aliphatischen Alkoholen mit 1 bis 20 Kohlenstoffatomen und α,β-olefinisch ungesättigten Carbonsäuren, den entsprechenden Diestern der entsprechenden Dicarbonsäuren und Hydroxyalkylestern von linearen, cyclischen oder verzweigten aliphatischen zwei- oder mehrwertigen Alkoholen mit 1 bis 20 Kohlenstoffatomen und α,β-olefinisch ungesättigten Carbonsäuren.

12. Tensid-freie wäßrige Dispersionen von Polymeren nach Anspruch 2, dadurch gekennzeichnet, daß zur Herstellung der Polymeren B Carbonylgruppen-haltige Vinylmonomere oder Amin- oder Hydrazingruppen-haltige Vinylmonomere in Massenanteilen von bis zu 7 % der Masse der Monomerenmischung eingesetzt werden.

13. Tensid-freie wäßrige Dispersionen von Polymeren nach Anspruch 2, dadurch gekennzeichnet, daß Feststoff-Massenanteil dieser Dispersionen 30 bis 80 % beträgt.

14. Verfahren zur Herstellung von tensid-freien wäßrigen Lösungen oder Dispersionen von Polymeren nach Anspruch 1, dadurch gekennzeichnet, daß carboxylgruppen-haltige äthylenisch ungesättigte Monomere gemeinsarn mit weiteren carboxylgruppen-freien äthylenisch ungesättigte Monomeren unter den Bedingungen einer radikalischen Polymerisation in Wasser umgesetzt werden, und die erhaltene Lösung oder Dispersion anschließend durch Zusatz von Basen teilweise oder vollständig neutralisiert wird.

15. Verfahren zur Herstellung von tensid-freien wäßrigen Dispersionen von Polymeren nach Anspruch 2, dadurch gekennzeichnet, daß die zur Herstellung des Polymeren B eingesetzte Monomerenmischung zu der wäßrigen Lösung oder Dispersion der Polymeren A zugefügt wird und eine Emulsionspolymerisation durch Zusatz von radikalischen Initiatoren ausgelöst wird.
